# EUROPEAN PATENT SPECIFICATION

(11) **EP 4 123 981 B1**
(45) Date of publication and mention of the grant of the patent: **13.08.2025**
(21) Application number: 20925920.9
(22) Date of filing: 17.03.2020
(51) Int. Cl.: H04W 40/02, H04L 45/24, H04W 40/00, H04L 47/2416, H04L 47/28, H04W 28/12, H04W 48/10, H04W 48/16, H04W 74/00, H04W 84/12

(54) **DATA TRANSMISSION METHOD AND DEVICE, AND COMPUTER STORAGE MEDIUM**
DATENÜBERTRAGUNGSVERFAHREN UND -VORRICHTUNG SOWIE COMPUTERSPEICHERMEDIUM
PROCÉDÉ ET DISPOSITIF DE TRANSMISSION DE DONNÉES ET SUPPORT DE STOCKAGE INFORMATIQUE

(43) Date of publication of application: 25.01.2023
(73) Proprietor: Beijing Xiaomi Mobile Software Co., Ltd., Beijing 100085 (CN)
(72) Inventor: DONG, Xiandong, Beijing 100085 (CN)
(74) Representative: dompatent von Kreisler Selting Werner - Partnerschaft von Patent- und Rechtsanwälten mbB
(86) International application number: PCT/CN2020/079559
(87) International publication number: WO 2021/184173

(56) References cited:
- CN-A- 106 488 407
- CN-A- 108 886 744
- CN-A- 109 891 927
- US-A1- 2018 132 234
- US-A1- 2019 253 339
- US-A1- 2019 254 057
- CMCC: "Enhancement for Time-Sensitive Networking", 3GPP DRAFT; R2-1815270, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Chengdu, China; 20181008 - 20181012, 28 September 2018 (2018-09-28), Mobile Competence Centre ; 650, route des Lucioles ; F-06921 Sophia-Antipolis Cedex ; France, XP051524625

## Description

### TECHNICAL FIELD

The invention relates to communication technologies, and in particular to, methods and a device for transmitting/receiving data, and a computer storage medium.

### BACKGROUND

Sometimes, the wireless network standard (IEEE802.11) has established a study group (SG) to study a next-generation wireless local area network (WLAN) standard (IEEE802.11be). The study scope is 320MHz bandwidth transmission/reception, aggregation and cooperation of multiple frequency bands/links and the like. The aggregation and cooperation of multiple frequency bands/links means that devices simultaneously communicate under frequency bands/links such as 2.4GHz, 5.8GHz, and 6-7GHz.

It is particularly important to ensure the low latency as a large number of high-throughput and low-latency applications appear. However, sometimes, there is no solution that supports low-latency requirements under multiple links. US2018132234A1 describes systems, methods, and apparatus related to wireless time sensitive networking. A device may determine one or more communication channels. The device may assign a first communication channel of the one or more communication channels, for time sensitive networking. The device may cause to send a frame including an indication of the first communication channel to one or more devices. The device may identify a time sensitive networking channel access request from a first device. The device may determine the first device is authorized to access the first communication channel. US2019253339A1 discloses a system and method for determining a network path through a network that is managed by a software defined network (Ts SDN) controller incorporating time management. In some embodiments, the SDN controller can determine that a data packet originating from a transmitting device and directed to a receiving device is associated with one of: time-sensitive, time-aware or best effort characteristic. The controller can then determine a network path for transport of the data packet from the transmitting device to the receiving device with a guaranteed end to end delay to satisfy the characteristic. The end to end delay considers latency through each layer the data packet transitions through after being conjured at an application layer of the transmitting device. The data packet is then transmitted from the transmitting device via the network path to the receiving device.

### SUMMARY

The invention is defined by the attached set of claims.

The invention provides methods and a device for transmitting/receiving data, and a computer storage medium. The invention is defined by the appended set of claims.

It is to be understood that both the foregoing general description and the following detailed description are exemplary and explanatory only and are not restrictive of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
FIG. 1 is a schematic diagram illustrating a format of a BSS load element according to some embodiments.
FIG. 2 is a schematic diagram illustrating a format of a BSS average access delay element according to some embodiments.
FIG. 3 is a schematic diagram illustrating a format of a BSS AC access delay element according to some embodiments.
FIG. 4 is a schematic diagram illustrating a format of an AC access delay subfield according to some embodiments.
FIG. 5 is a first flow chart illustrating a method for receiving data according to some embodiments.
FIG. 6 is a schematic diagram illustrating a format of a BSS load element under a plurality of communication links according to some embodiments.
FIG. 7 is a schematic diagram illustrating a format of a BSS access delay element under a plurality of communication links according to some embodiments.
FIG. 8 is a schematic diagram illustrating a format of a BSS AC access delay element under a plurality of communication links according to some embodiments.
FIG. 9 is a second flow chart illustrating a method for transmitting data according to some embodiments.
FIG. 10 is a first block diagram illustrating an apparatus for transmitting data according to some embodiments.
FIG. 11 is a second block diagram illustrating an apparatus for receiving data according to some embodiments.
FIG. 12 is a first block diagram illustrating a device 800 for implementing a method for transmitting data according to some embodiments.
FIG. 13 is a second block diagram illustrating a device 800 for implementing a method for receiving data according to some embodiments.

### DETAILED DESCRIPTION

Reference will now be made in detail to some embodiments, examples of which are illustrated in the accompanying drawings. The following description refers to the accompanying drawings in which the same numbers in different drawings represent the same or similar elements unless otherwise represented. The implementations set forth in the following description of some embodiments do not represent all implementations consistent with the invention. Instead, they are merely examples of apparatuses and methods consistent with aspects related to the invention as recited in the appended claims.

Terms used in the invention are merely for describing specific examples and are not intended to limit the invention. The singular forms "one", "the", and "this" used in the invention and the appended claims are also intended to include a multiple form, unless other meanings are clearly represented in the context. It should also be understood that the term "and/or" used in the invention refers to any or all of possible combinations including one or more associated listed items.

It should be understood that although terms "first", "second", "third", and the like are used in the invention to describe various information, the information is not limited to the terms. These terms are merely used to differentiate information of a same type. For example, without departing from the scope of the invention, first information is also referred to as second information, and similarly the second information is also referred to as the first information. Depending on the context, for example, the term "if" used herein may be explained as "when" or "while", or "in response to ..., it is determined that".

Sometimes, IEEE802.11 has established a SG to study a next-generation WLAN standard (IEEE802.11be). The study scope is 320MHz bandwidth transmission/reception, aggregation and cooperation of multiple frequency bands/links and the like. The aggregation and cooperation of multiple frequency bands/links means that devices simultaneously communicate under frequency bands/links such as 2.4GHz, 5.8GHz, and 6-7GHz.

In the scope of IEEE802.11be, 802.11be should support transmission/reception of time-sensitive data.

In the existing standards, in order to ensure that the station (STA) device can quickly access the network, a BSS load element, a BSS access delay element and a BSS AC access delay element are introduced.

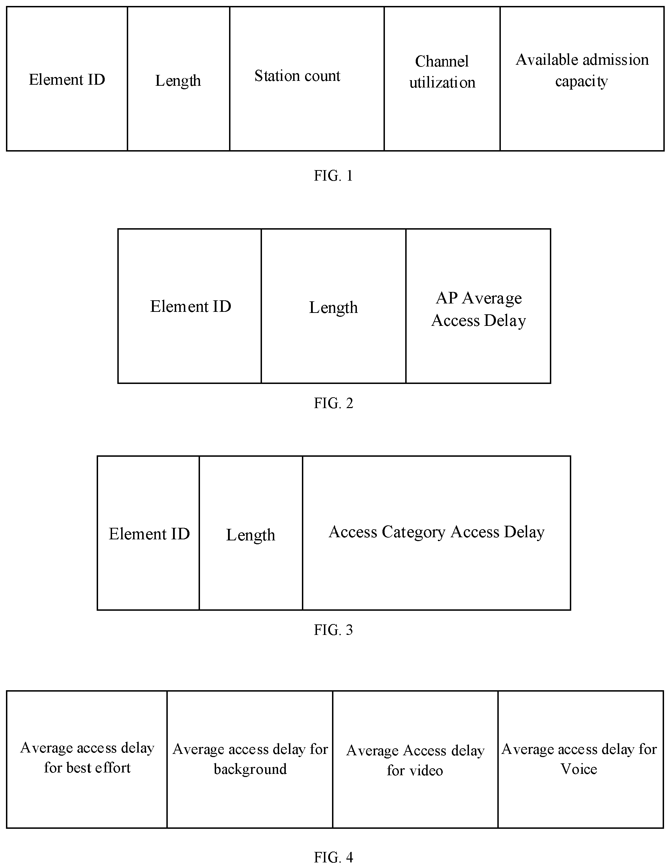

FIG. 1 illustrates a schematic diagram of a format of a BSS load element. As can be seen from FIG. 1, the format of the BSS load element includes the following information: element ID, length, station count, channel utilization and available admission capacity. Element ID, length and channel utilization each occupies 1 byte (octet) and station count and available admission capacity each occupies 2 bytes.

FIG. 2 illustrates a schematic diagram of a format of a BSS average access delay element. As can be seen from FIG. 2, the format of the BSS average access delay element includes the following information: element ID, length and access point (AP) average access delay. Each of the above information occupies 1 byte.

FIG. 3 illustrates a schematic diagram of a format of a BSS AC access delay element. As can be seen from FIG. 3, the format of the BSS AC access delay element includes the following information: element ID, length and AC access delay. AC access delay occupies 4 bytes, and element ID and length each occupies 1 byte.

FIG. 4 illustrates a schematic diagram of a format of AC access delay subfields. As can be seen from FIG. 4, the format of the AC access delay subfields includes the following information: average access delay for best effort (AC_BE), average access delay for background (AC_BK), average access delay for video (AC_VI) and average access delay for voice (AC_VO). AC_BE, AC_BK, AC_VI and AC_VO each occupies 1 byte.

The above-mentioned BSS load element is applicable when the STA device roams from one BSS to another BSS, but it also serves as a reference for the STA device accessing the BSS.

The above-mentioned information elements are all applied to one link, but devices in IEEE802.11be support communication under a plurality of links. With the combination of IEEE802.1 The definition that should support low latency, similar existing mechanisms are also required in 802.11be to reduce the transmission/reception delay.

Based on the above-mentioned wireless communication system, various embodiments of the method of the invention are proposed to reduce the data transmission/reception delay under the plurality of links.

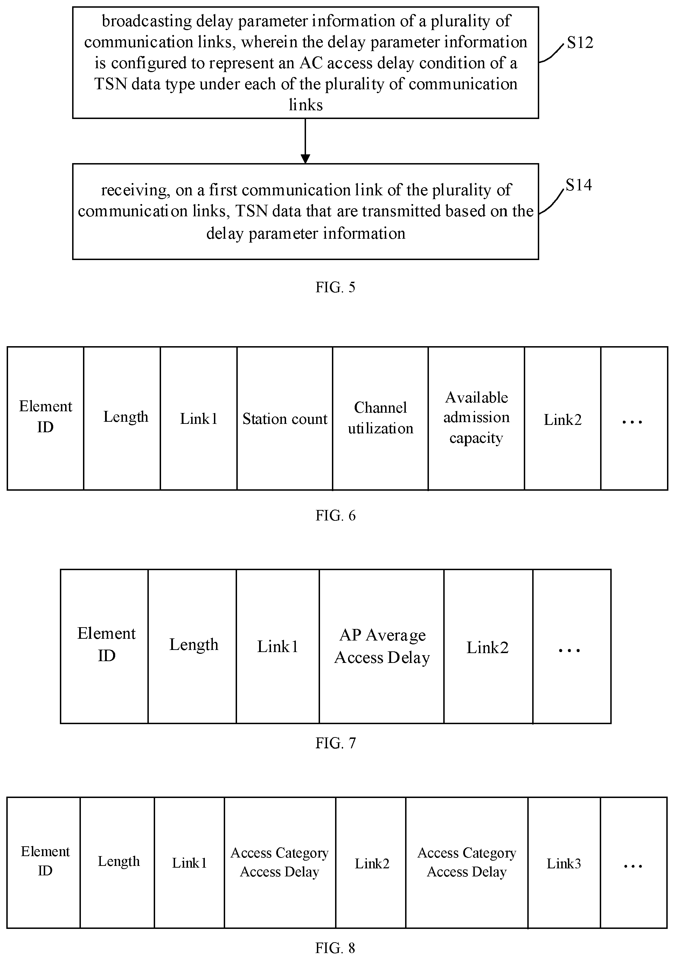

FIG. 5 is a first flow chart illustrating a method for receiving data according to some embodiments. The method for receiving data is applicable to an AP device. The AP device includes but is not limited to a router device. Referring to FIG. 5, the method for receiving data includes the following steps.

In S12, delay parameter information of a plurality of communication links is broadcasted, in which the delay parameter information is configured to represent an AC access delay condition of a TSN data type under each of the plurality of communication links.

In S14, TSN data that are transmitted based on the delay parameter information are received on a first communication link of the plurality of communication links.

The plurality of communication links includes a plurality of communication links in a same communication frequency band; and/or, a plurality of communication links in different communication frequency bands.

For example, under 2.4GHz, there are 3 bandwidths and 3 communication links are established, which are recorded as link1, link2, and link3; and under 5.8GHz, there are 5 bandwidths and 5 communication links are established, which are recorded as link4, link5, link6, link7, and link8.

In some embodiments, the delay parameter information includes AC access delay information.

In some embodiments, the delay parameter information includes AC access delay information and BSS load information.

In some embodiments, the delay parameter information includes AC access delay information and BSS access delay information.

In some embodiments, the delay parameter information includes AC access delay information, BSS load information and BSS access delay information.

In some embodiments, broadcasting the delay parameter information of the plurality of communication links includes broadcasting the delay parameter information of the plurality of communication links through a beacon frame.

In this way, the delay parameter information of the plurality of communication links is broadcasted through the beacon frame, which does not need to define a new message frame or signaling, and can save the signaling overhead.

In some embodiments, the beacon frame includes a plurality of link identification fields, and different link identification fields are configured to indicate different communication links among the plurality of communication links.

In some embodiments, different link identification fields are further configured to indicate communication frequency bands to which different communication links belong.

In some embodiments, the link identification field includes a first field configured to indicate a communication link identifier; and a second field configured to indicate a communication frequency band identifier of the communication link identifier.

For example, three bits are used to identify the communication frequency band, "000" means 2.4GHz, "001" means 3.6GHz, "010" means 4.9 and 5GHz, "011" means 6-7GHz, "100" means 60GHz and the like.

In some embodiments, the beacon frame includes an AC access delay field, and the AC access delay field includes a third field configured to indicate an AC access delay of the TSN data type.

FIG. 6 illustrates a schematic diagram of a format of a BSS load element under a plurality of communication links. Referring to FIG. 6, the format of the BSS load element under the plurality of communication links includes element ID, length and a plurality of link identification fields. It also includes station count, channel utilization and available admission capacity of each communication link.

FIG. 7 illustrates a schematic diagram of a format of a BSS access delay element under a plurality of communication links. As can be seen from FIG. 7, the format of the BSS access delay element includes element ID, length and a plurality of link identification fields, and also includes AP average access delay for each communication link.

FIG. 8 illustrates a schematic diagram of a format of a BSS AC access delay element under a plurality of communication links. As can be seen from FIG. 8, the format of the BSS AC access delay element includes element ID, length and a plurality of link identification fields, and also includes AC access delay of each communication link. AC access delay of each communication link includes AC access delay of the TSN data type.

In order to ensure fairness, parameters used in AC access delay and BSS access delay can be consistent with those defined in existing standards, such as:
0: access delay<8µs
1: 8µs≤access delay< 16µs
2≤n≤14: n×8µs≤access delay<(n+1)8µs
15: 120µs≤access delay< 128µs
16: 128µs≤access delay< 144µs
17≤n≤106: (n×16)-128µs≤access delay<((n+1)×16)-128µs
107: 1584µs≤access delay< 1600µs
108: 1600µs≤access delay< 1632µs
109≤n≤246: (n×32)-1856µs≤access delay<((n+1)×32)-1856µs
247: 6048µs≤access delay<6080µs
248: 6080µs≤access delay<8192µs
249: 8192µs≤access delay< 12288µs
250: 12288µs≤access delay< 16384µs
251: 16384µs≤access delay<20480µs
252: 20480µs≤access delay<24576µs
253: 24576µs≤access delay
254: service unable to access channel;
If the AC access delay field is 8 bits, and when it is set to "00000000", the flag n=0; when it is set to "00000001", the flag n=1.

In some embodiments, broadcasting the delay parameter information of the plurality of communication links includes broadcasting the delay parameter information of the plurality of communication links in each communication link established with an STA.

In this way, by broadcasting the delay parameter information of the plurality of communication links to each communication link, the probability that the STA learns the delay parameter information of the plurality of communication links can be improved.

In some embodiments, broadcasting the delay parameter information of the plurality of communication links includes: in response to establishing at least one communication link with an STA, broadcasting the delay parameter information of the plurality of communication links in one communication link that is established with the STA.

In this way, transmission/reception resources can be saved.

In the technical solutions described in embodiments of the invention, the AP device broadcasts the delay parameter information of the plurality of communication links, in which the delay parameter information is configured to represent the AC access delay condition of the TSN data type under each of the plurality of communication links; and receives the TSN data that are transmitted based on the delay parameter information on the first communication link in the plurality of communication links. In this way, it is convenient for the STA to transmit the TSN data to be transmitted on the first communication link in the plurality of communication links which satisfies the TSN data transmission/reception delay requirement. Therefore, the transmission/reception delay of the TSN data can be reduced as much as possible and the low-latency requirement of the TSN data transmission/reception can be satisfied.

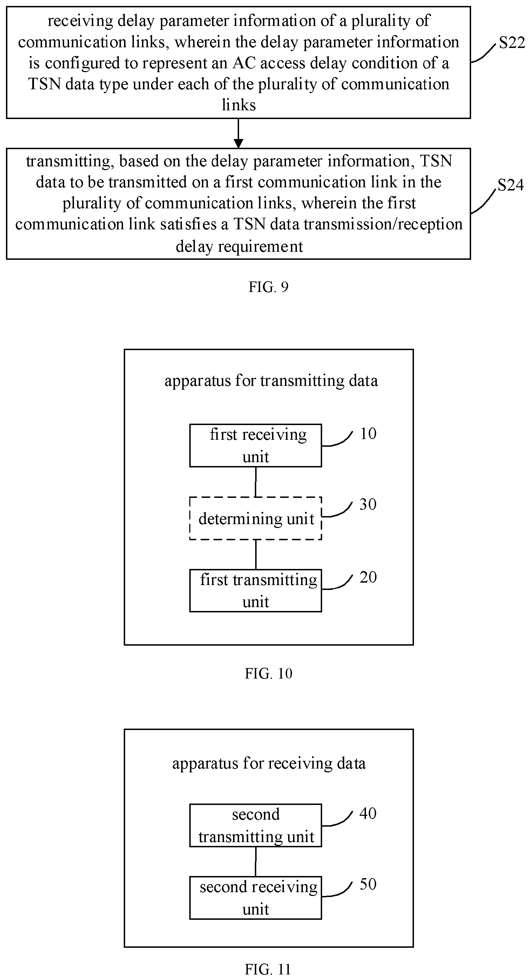

FIG. 9 is a second flow chart illustrating a method for transmitting data according to some embodiments. The method for transmitting data is applicable to an STA. The STA includes but is not limited to a laptop computer, a tablet computer and other user equipment that can be networked. As illustrated in FIG. 9, the method for transmitting data includes the following steps.

In S22, delay parameter information of a plurality of communication links is received, in which the delay parameter information is configured to represent an AC access delay condition of a TSN data type under each of the plurality of communication links.

In S24, TSN data to be transmitted are transmitted based on the delay parameter information on a first communication link in the plurality of communication links, in which the first communication link satisfies a TSN data transmission/reception delay requirement.

The plurality of communication links includes a plurality of communication links in a same communication frequency band; and/or, a plurality of communication links in different communication frequency bands.

For example, the STA supports 2.4GHz, 5.8GHz, and 6GHz, and the AP supports 2.4GHz, 5.8GHz, and 6GHz. The STA currently only works at 2.4GHz. According to the delay parameter information received under 2.4GHz, it is determined that the delay is the lowest at 6GHz, and the TSN data are transmitted at 6GHz.

In this way, the STA selects the first communication link that satisfies the TSN data transmission/reception delay requirement from the plurality of communication links according to the received delay parameter information of the plurality of communication links, and transmits the TSN data to be transmitted on the first communication link. Compared with blindly selecting any communication link as the first communication link, it can reduce the transmission/reception delay of the TSN data as much as possible and ensure the transmission/reception of the TSN data.

In some embodiments, the delay parameter information includes AC access delay information of the TSN data type, and the method include the following.

In step S23a, a communication link with a smallest AC access delay value of the TSN data type is selected from the plurality of communication links as the first communication link.

For example, the communication links include AC access delay d1 of TSN data type 1 of communication link 1, AC access delay d2 of TSN data type 1 of communication link 2, and AC access delay d3 of TSN data type 1 of communication link 3. If d1>d2>d3, communication link 3 is determined as the first communication link.

In some embodiments, the delay parameter information includes BSS load information and AC access delay information of the TSN data type, and the method include the following.

In step 23b, a communication link with an AC access delay value of the TSN data type lower than a preset delay threshold and a BSS load value lower than a preset load threshold is selected from the plurality of communication links as the first communication link.

For example, the delay parameter information includes: AC access delay d1 of TSN data type 1 of communication link 1, AC access delay d2 of TSN data type 1 of communication link 2, and AC access delay d3 of TSN data type 1 of communication link 3, where d1>d2>d3; BSS load value r1 of communication link 1, BSS load value r2 of communication link 2, and BSS load value r3 of communication link 3, where r1<r2< r3; if the access delay of communication link 2 and communication link 3 satisfy the delay requirement of TSN data type 1, that is, it is lower than the preset delay threshold, load value r2 of communication link 2 is lower than the preset load threshold, and load value r3 of communication link 3 is higher than the preset load threshold, communication link 2 is selected as the first communication link.

In some embodiments, step S23b includes step S23b1.

In step S23b1, in response to the BSS load value of each of at least two communication links being lower than the preset load threshold and the AC access delay value of the TSN data type of each of at least two communication links being lower than the preset delay threshold, a communication link with a smallest AC access delay value of the TSN data type is selected from the at least two communication links as the first communication link.

For example, the delay parameter information includes: AC access delay d1 of TSN data type 2 of communication link 1, AC access delay d2 of TSN data type 2 of communication link 2, and AC access delay d3 of TSN data type 2 of communication link 3, where d1>d2>d3; BSS load value r1 of communication link 1, BSS load value r2 of communication link 2, and BSS load value r3 of communication link 3, where r1<r2< r3; if the access delay of communication link 2 and communication link 3 satisfy the delay requirement of TSN data type 2, that is, it is lower than the preset delay threshold, and load value r2 of communication link 2 and load value r3 of communication link 3 are lower than the load preset threshold, communication link 3 with the smallest AC access delay value of TSN data type 2 is selected from communication link 2 and communication link 3 as the first communication link.

In some embodiments, step S23b includes step S23b2.

In step S23b2, in response to the BSS load value of each of at least two communication links being lower than the preset load threshold and the AC access delay value of the TSN data type of each of the at least two communication links being lower than the preset delay threshold, a communication link with a smallest BSS load value is selected from the at least two communication links as the first communication link.

For example, the delay parameter information includes: AC access delay d1 of TSN data type 2 of communication link 1, AC access delay d2 of TSN data type 2 of communication link 2, and AC access delay d3 of TSN data type 2 of communication link 3, where d1>d2>d3; BSS load value r1 of communication link 1, BSS load value r2 of communication link 2, and BSS load value r3 of communication link 3, where r1<r2< r3; if the access delay of communication link 2 and communication link 3 satisfy the delay requirement of TSN data type 2, that is, it is lower than the preset delay threshold, and load value r2 of communication link 2 and load value r3 of communication link 3 are lower than the preset load threshold, communication link 2 with the smallest BSS load value is selected from communication link 2 and communication link 3 as the first communication link.

In some embodiments, step S22 includes step S22a.

In step S22a, the delay parameter information of the plurality of communication links broadcasted through a beacon frame is received.

In some embodiments, the beacon frame includes a plurality of link identification fields, and different link identification fields are configured to indicate different communication links among the plurality of communication links.

In some embodiments, different link identification fields are further configured to indicate communication frequency bands to which different communication links belong.

In some embodiments, the link identification field includes: a first field configured to indicate a communication link identifier; and a second field configured to indicate a communication frequency band identifier of the communication link identifier.

In some embodiments, the beacon frame includes an AC access delay field, and the AC access delay field includes: a third field configured to indicate an AC access delay of the TSN data type.

In some embodiments, the delay parameter information further includes BSS access delay information configured to indicate to monitor a next beacon frame that arrives.

In this way, since the delay parameter information also carries the BSS access delay information, the STA can clearly understand the time to monitor the next arriving beacon frame after learning the BSS access delay information.

In the technical solutions described in embodiments of the invention, the STA receives the delay parameter information of the plurality of communication links, in which the delay parameter information is configured to represent the AC access delay condition of the TSN data type under each of the plurality of communication links; and transmits the TSN data to be transmitted based on the delay parameter information on the first communication link that satisfies the TSN data transmission/reception delay requirement in the plurality of communication links. In this way, the transmission/reception delay of the TSN data can be reduced as much as possible and the low-latency requirement of the TSN data transmission/reception can be satisfied.

FIG. 10 is a first block diagram illustrating an apparatus for transmitting data according to some embodiments. The apparatus for transmitting data is applicable to an STA. Referring to FIG. 10, the apparatus includes a first receiving unit 10 and a first transmitting unit 20.

The first receiving unit 10 is configured to receive delay parameter information of a plurality of communication links, in which the delay parameter information is configured to represent an AC access delay condition of a TSN data type under each of the plurality of communication links.

The first transmitting unit 20 is configured to transmit, based on the delay parameter information, TSN data to be transmitted on a first communication link that satisfies a TSN data transmission/reception delay requirement in the plurality of communication links.

In some embodiments, the apparatus further a determining unit 30.

The determining unit 30 is configured to select the first communication link from the plurality of communication links.

In some embodiments, the delay parameter information includes AC access delay information of the TSN data type, and the determining unit 30 is configured to select a communication link with a smallest AC access delay value of the TSN data type from the plurality of communication links as the first communication link.

In some embodiments, the delay parameter information includes BSS load information and AC access delay information of the TSN data type, and the determining unit 30 is configured to select a communication link with an AC access delay value of the TSN data type lower than a preset delay threshold and a BSS load value lower than a preset load threshold from the plurality of communication links as the first communication link.

In some embodiments, the determining unit 30 is configured to, in response to the BSS load value of each of at least two communication links being lower than the preset load threshold and the AC access delay value of the TSN data type of each of at least two communication links being lower than the preset delay threshold, select a communication link with a smallest AC access delay value of the TSN data type from the at least two communication links as the first communication link.

In some embodiments, the determining unit 30 is configured to, in response to the BSS load value of each of at least two communication links being lower than the preset load threshold and the AC access delay value of the TSN data type of each of the at least two communication links being lower than the preset delay threshold, select a communication link with a smallest BSS load value from the at least two communication links as the first communication link.

In some embodiments, the first receiving unit 10 is configured to receive, the delay parameter information of the plurality of communication links, that is broadcasted through a beacon frame.

The beacon frame includes a plurality of link identification fields, and different link identification fields are configured to indicate different communication links among the plurality of communication links.

With respect to the apparatuses in the above embodiments, the specific manners for performing operations for individual modules therein have been described in detail in the embodiments regarding the methods, which will not be elaborated herein.

In practical applications, the specific structures of the first receiving unit 10, the first transmitting unit 20 and the determining unit 30 can be realized by a central processing unit (CPU), a micro controller unit (MCU), a digital signal processor (DSP) or a programmable logic controller (PLC) in the apparatus for transmitting data or in the STA device to which the apparatus for transmitting data belongs.

The apparatus for transmitting data described in embodiments may be installed on the STA device side.

Those skilled in the art should understand that functions of various processing modules in the apparatus for transmitting data described in embodiments of the invention can be understood by referring to the relevant description of the method for transmitting data applied to the STA device side. Various processing modules in embodiments of the invention may be implemented by analog circuit(s) that implements functions described in embodiments of the invention or may be implemented by running software that implements functions described in embodiments of the invention on a device.

With the apparatus for transmitting data described in embodiments of the invention, the transmission/reception delay of the TSN data can be reduced as much as possible and the low-latency requirement of the TSN data transmission/reception can be satisfied.

FIG. 11 is a second block diagram illustrating an apparatus for receiving data according to some embodiments. The apparatus for receiving data is applicable to an AP. Referring to FIG. 11, the apparatus includes a second transmitting unit 40 and a second receiving unit 50.

The second transmitting unit 40 is configured to broadcast delay parameter information of a plurality of communication links, in which the delay parameter information is configured to represent an AC access delay condition of a TSN data type under each of the plurality of communication links.

The second receiving unit 50 is configured to receive, on a first communication link of the plurality of communication links, TSN data that are transmitted based on the delay parameter information.

With respect to the apparatuses in the above embodiments, the specific manners for performing operations for individual modules therein have been described in detail in the embodiments regarding the methods, which will not be elaborated herein.

In practical applications, the specific structures of the second transmitting unit 40 and the second receiving unit 50 can be implemented by a CPU, MCU, DSP, or PLC in the apparatus for receiving data or the AP device to which the apparatus for receiving data belongs.

The apparatus for receiving data described in embodiments may be installed on the AP device side.

Those skilled in the art should understand that functions of various processing modules in the apparatus for receiving data described in embodiments of the invention can be understood by referring to the relevant description of the method for receiving data applied to the AP device side. Various processing modules in embodiments of the invention may be implemented by analog circuit(s) that implements functions described in embodiments of the invention or may be implemented by running software that implements functions described in embodiments of the invention on a device.

With the apparatus for receiving data described in embodiments of the invention, the transmission/reception delay of the TSN data can be reduced as much as possible and the low-latency requirement of the TSN data transmission/reception can be satisfied.

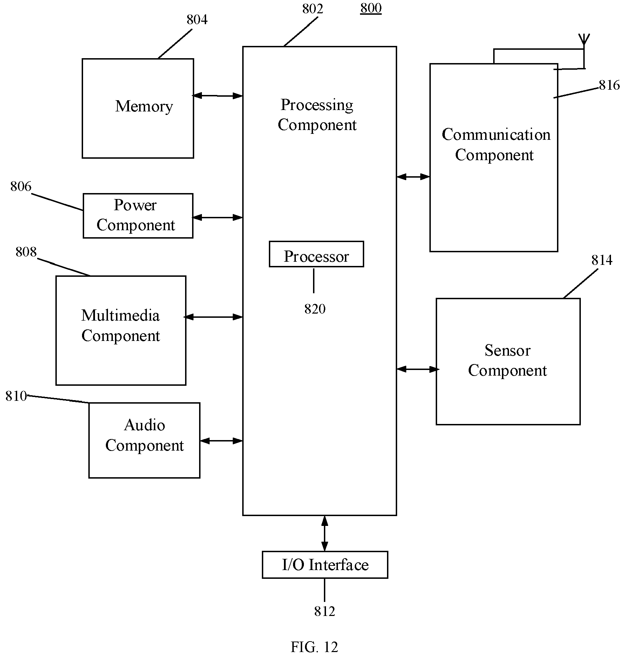

FIG. 12 is a block diagram of a device 800 for implementing information processing, according to some embodiments. For example, the device 800 may be a mobile phone, a computer, a digital broadcast terminal, a messaging device, a gaming console, a tablet, a medical device, exercise equipment, a personal digital assistant, and the like.

Referring to FIG. 12, the device 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the device 800, such as the operations associated with display, telephone calls, data communications, camera operations, and recording operations. The processing component 802 may include one or more processors 820 to execute instructions to perform all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the device 800. Examples of such data include instructions for any applications or methods operated on the device 800, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the device 800. The power component 806 may include a power management system, one or more power sources, and any other components associated with the generation, management, and distribution of power in the device 800.

The multimedia component 808 includes a screen providing an output interface between the device 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and the rear camera may receive an external multimedia datum while the device 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone ("MIC") configured to receive an external audio signal when the device 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the device 800. For instance, the sensor component 814 may detect an open/closed status of the device 800, relative positioning of components, e.g., the display and the keypad, of the device 800, a change in position of the device 800 or a component of the device 800, a presence or absence of user contact with the device 800, an orientation or an acceleration/deceleration of the device 800, and a change in temperature of the device 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the device 800 and other devices. The device 800 can access a wireless network based on a communication standard, such as WiFi, 2G, or 3G, or a combination thereof. In one some embodiments, the communication component 816 receives a broadcast signal or broadcast associated information from an external broadcast management system via a broadcast channel. In one some embodiments, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In some embodimentss, the device 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In some embodiments, there is also provided a non-transitory computer-readable storage medium including instructions, such as included in the memory 804, executable by the processor 820 in the device 800, for performing the above-described methods. For example, the non-transitory computer-readable storage medium may be a ROM, a RAM, a CD-ROM, a magnetic tape, a floppy disc, an optical data storage device, and the like.

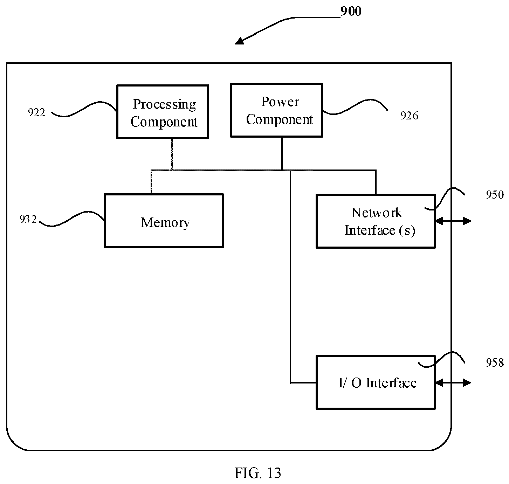

FIG. 13 is a block diagram of a device 900 for implementing information processing, according to some embodiments. For example, the device 900 may be a server. Referring to FIG. 13, the device 900 includes a processing component 922 that further includes one or more processors, and a memory resource represented by a memory 932 for storing instructions that can be executed by the processing component 922 such as application programs. The application program stored in the memory 932 may include one or more modules each corresponding to a set of instructions. In addition, the processing component 922 is configured to execute instructions to perform the above-mentioned methods.

The device 900 may also include a power component 926 configured to perform power management of the device 900, a wired or wireless network interface 950 configured to connect the device 900 to a network, and an input output (I/O) interface 958. The device 900 can operate based on an operating system stored in the memory 932, such as Windows Server^{™}, Mac OS X^{™}, Unix^{™}, Linux^{™}, FreeBSD^{™} or the like.

The technical solutions described in embodiments of the invention can be combined arbitrarily without conflict.

Other embodiments of the invention will be apparent to those skilled in the art from consideration of the specification and practice of the invention disclosed here.

## Claims

1. A method for transmitting data, performed by a station, comprising:
receiving (S22) delay parameter information of a plurality of communication links, wherein the delay parameter information indicates an access category, AC, access delay information of a time sensitive network, TSN, data type under each communication link;
**characterized in:**
selecting a first communication link that satisfies a TSN data transmission/reception delay requirement from the plurality of communication links according to the AC access delay information; and
transmitting (S24), based on the delay parameter information, TSN data to be transmitted on the first communication link.

2. The method as claimed in claim 1, wherein selecting the first communication link comprises:
selecting a communication link with a smallest AC access delay value of the TSN data type from the plurality of communication links as the first communication link.

3. The method as claimed in claim 1, wherein the delay parameter information further comprises basic service set, BSS, load information, and selecting the first communication link comprises:
selecting a communication link with an AC access delay value of the TSN data type lower than a preset delay threshold and a BSS load value lower than a preset load threshold from the plurality of communication links as the first communication link.

4. The method as claimed in claim 3, wherein selecting the communication link with the AC access delay value of the TSN data type lower than the preset delay threshold and the BSS load value lower than the preset load threshold from the plurality of communication links as the first communication link comprises:
in response to the BSS load value of each of at least two communication links being lower than the preset load threshold and the AC access delay value of the TSN data type of each of at least two communication links being lower than the preset delay threshold, selecting a communication link with a smallest AC access delay value of the TSN data type from the at least two communication links as the first communication link.

5. The method as claimed in claim 3, wherein selecting the communication link with the AC access delay value of the TSN data type lower than the preset delay threshold and the BSS load value lower than the preset load threshold from the plurality of communication links as the first communication link comprises:
in response to the BSS load value of each of at least two communication links being lower than the preset load threshold and the AC access delay value of the TSN data type of each of the at least two communication links being lower than the preset delay threshold, selecting a communication link with a smallest BSS load value from the at least two communication links as the first communication link.

6. The method as claimed in claim 1, wherein receiving (S22) the delay parameter information of the plurality of communication links comprises:
receiving the delay parameter information of the plurality of communication links broadcasted through a beacon frame;
wherein the beacon frame comprises a plurality of link identification fields, and different link identification fields are configured to indicate different communication links among the plurality of communication links.

7. The method as claimed in claim 6, wherein the different link identification fields are further configured to indicate communication frequency bands to which the different communication links belong.

8. The method as claimed in claim 7, wherein the link identification field comprises:
a first field configured to indicate a communication link identifier; and
a second field configured to indicate a communication frequency band identifier of the communication link identifier.

9. The method as claimed in claim 6, wherein the beacon frame comprises an AC access delay field, and the AC access delay field comprises:
a third field configured to indicate an AC access delay of the TSN data type.

10. The method as claimed in claim 2 or 3, wherein the delay parameter information further comprises:
BSS access delay information configured to indicate to monitor a next beacon frame that arrives, so that the station understands time to monitor the next arriving beacon frame after learning the BSS access delay information.

11. A method for receiving data, performed by an access point, comprising:
broadcasting (S12) delay parameter information of a plurality of communication links, wherein the delay parameter information indicates an access category, AC, access delay information of a time sensitive network, TSN, data type under each of the plurality of communication links, and **characterized in that** the AC access delay information enables a station to select a first communication link that satisfies a TSN data transmission/reception delay requirement from the plurality of communication links; and
receiving (S14), on the first communication link, TSN data that are transmitted based on the delay parameter information.

12. The method as claimed in claim 11, wherein broadcasting (S12) the delay parameter information of the plurality of communication links comprises:
broadcasting the delay parameter information of the plurality of communication links through a beacon frame.

13. The method as claimed in claim 11 or 12, wherein broadcasting (S12) the delay parameter information of the plurality of communication links comprises:
broadcasting the delay parameter information of the plurality of communication links in each communication link that is established with a station,
or, in response to establishing at least one communication link with a station, broadcasting the delay parameter information of the plurality of communication links in one communication link that is established with the station.

14. A device for transmitting/receiving data, comprising:
a processor; and
a memory for storing instructions executable by the processor;
wherein the processor is configured to execute the instructions to perform the method for transmitting data as claimed in any one of claims 1 to 10 or the method for receiving data as claimed in any one of claims 11 to 13.

15. A computer storage medium having stored therein instructions that, when executed by a processor, causes the processor to perform the method for transmitting data as claimed in any one of claims 1 to 10 or the method for receiving data as claimed in any one of claims 11 to 13.

## Patentansprüche

1. Verfahren zum Übertragen von Daten, das von einer Station durchgeführt wird, umfassend:
Empfangen (S22) von Verzögerungsparameterinformationen einer Vielzahl von Kommunikationsverbindungen, wobei die Verzögerungsparameterinformationen Zugangskategorie-, AC, Zugangsverzögerungsinformationen eines Datentyps eines zeitkritischen Netzwerks, TSN, unter jeder Kommunikationsverbindung angeben;
**gekennzeichnet durch**:
Auswählen einer ersten Kommunikationsverbindung, die eine TSN-Datenübertragungs/-empfangsverzögerungsanforderung erfüllt, aus der Vielzahl von Kommunikationsverbindungen entsprechend den AC-Zugangsverzögerungsinformationen; und
Übertragen (S24), basierend auf den Verzögerungsparameterinformationen, von TSN-Daten, die auf der ersten Kommunikationsverbindung übertragen werden sollen.

2. Verfahren nach Anspruch 1, wobei das Auswählen der ersten Kommunikationsverbindung umfasst:
Auswählen einer Kommunikationsverbindung mit einem kleinsten AC-Zugangsverzögerungswert des TSN-Datentyps aus der Vielzahl von Kommunikationsverbindungen als die erste Kommunikationsverbindung.

3. Verfahren nach Anspruch 1, wobei die Verzögerungsparameterinformationen ferner Basic-Service-Set-, BSS, Lastinformationen umfassen, und das Auswählen der ersten Kommunikationsverbindung umfasst:
Auswählen einer Kommunikationsverbindung, bei der ein AC-Zugangsverzögerungswert des TNS-Datentyps niedriger als ein vorbestimmter Verzögerungsschwellenwert ist und ein BSS-Lastwert niedriger als ein vorbestimmter Lastschwellenwert ist, aus der Vielzahl von Kommunikationsverbindungen als die erste Kommunikationsverbindung.

4. Verfahren nach Anspruch 3, wobei das Auswählen der Kommunikationsverbindung, bei welcher der AC-Zugangsverzögerungswert des TSN-Datentyps niedriger als der vorbestimmte Verzögerungsschwellenwert ist und der BSS-Lastwert niedriger als der vorbestimmten Lastschwellenwert ist, aus der Vielzahl von Kommunikationsverbindungen als die erste Kommunikationsverbindung umfasst:
als Reaktion darauf, dass der BSS-Lastwert jeder der mindestens zwei Kommunikationsverbindungen niedriger als der vorbestimmte Lastschwellenwert ist und der AC-Zugangsverzögerungswert des TSN-Datentyps jeder der mindestens zwei Kommunikationsverbindungen niedriger als der vorbestimmte Verzögerungsschwellenwert ist, Auswählen einer Kommunikationsverbindung mit einem kleinsten AC-Zugangsverzögerungswert des TSN-Datentyps aus den mindestens zwei Kommunikationsverbindungen als die erste Kommunikationsverbindung.

5. Verfahren nach Anspruch 3, wobei das Auswählen der Kommunikationsverbindung, bei welcher der AC-Zugangsverzögerungswert des TSN-Datentyps niedriger als der vorbestimmte Verzögerungsschwellenwert ist und der BSS-Lastwert niedriger als der vorbestimmte Lastschwellenwert ist, aus der Vielzahl von Kommunikationsverbindungen als die erste Kommunikationsverbindung umfasst:
als Reaktion darauf, dass der BSS-Lastwert jeder der mindestens zwei Kommunikationsverbindungen niedriger als der vorbestimmte Lastschwellenwert ist und der AC-Zugangsverzögerungswert des TSN-Datentyps jeder der mindestens zwei Kommunikationsverbindungen niedriger als der vorbestimmte Verzögerungsschwellenwert ist, Auswählen einer Kommunikationsverbindung mit einem kleinsten BSS-Lastwert aus den mindestens zwei Kommunikationsverbindungen als die erste Kommunikationsverbindung.

6. Verfahren nach Anspruch 1, wobei das Empfangen (S22) der Verzögerungsparameterinformationen der Vielzahl von Kommunikationsverbindungen umfasst:
Empfangen der Verzögerungsparameterinformationen der Vielzahl von Kommunikationsverbindungen, die über einen Beacon-Frame gebroadcastet werden;
wobei der Beacon-Frame eine Vielzahl von Verbindungsidentifikationsfeldern umfasst, und wobei verschiedene Verbindungsidentifikationsfelder dazu ausgebildet sind, verschiedene Kommunikationsverbindungen unter der Vielzahl von Kommunikationsverbindungen anzugeben.

7. Verfahren nach Anspruch 6, wobei die verschiedenen Verbindungsidentifikationsfelder ferner dazu ausgebildet sind, Kommunikationsfrequenzbänder anzugeben, zu denen die verschiedenen Kommunikationsverbindungen gehören.

8. Verfahren nach Anspruch 7, wobei die Verbindungsidentifikationsfelder aufweisen:
ein erstes Feld, das dazu ausgebildet ist, eine Kommunikationsverbindungskennung anzugeben; und
ein zweites Feld, das dazu ausgebildet ist, eine Kommunikationsfrequenzbandkennung der Kommunikationsverbindungskennung anzugeben.

9. Verfahren nach Anspruch 6, wobei der Beacon-Frame ein AC-Zugangsverzögerungsfeld aufweist und das AC-Zugangsverzögerungsfeld aufweist:
ein drittes Feld, das dazu ausgebildet ist, eine AC-Zugangsverzögerung des TSN-Datentyps anzugeben.

10. Verfahren nach Anspruch 2 oder 3, wobei die Verzögerungsparameterinformationen ferner umfassen: BSS-Zugangsverzögerungsinformationen, die dazu dienen, anzuzeigen, dass ein nächster ankommender Beacon-Frame überwacht werden soll, so dass die Station die Zeit zum Überwachen des nächsten ankommen Beacon-Frames nach dem Lernen der BSS-Zugangsverzögerungsinformationen versteht.

11. Verfahren zum Empfangen von Daten, das von einem Access Point durchgeführt wird, umfassend:
Broadcasten (S12) von Verzögerungsparameterinformationen einer Vielzahl von Kommunikationsverbindungen, wobei die Verzögerungsparameterinformationen Zugangskategorie-, AC, Zugangsverzögerungsinformationen eines Datentyps eines zeitkritischen Netzwerks, TSN, unter jeder Kommunikationsverbindung angeben, und **dadurch gekennzeichnet, dass** die AC-Zugangsverzögerungsinformationen einer Station ermöglichen, eine erste Kommunikationsverbindung, die eine TSN-Datenübertragungsj-empfangsverzögerungsanforderung erfüllt, aus der Vielzahl von Kommunikationsverbindungen auszuwählen; und
Empfangen (S14), auf der ersten Kommunikationsverbindung, von TSN-Daten, die basierend auf den Verzögerungsparameterinformationen übertragen werden.

12. Verfahren nach Anspruch 11, wobei das Broadcasten (S12) der Verzögerungsparameterinformationen der Vielzahl von Kommunikationsverbindungen umfasst:
Broadcasten der Verzögerungsparameterinformationen der Vielzahl von Kommunikationsverbindungen über einen Beacon-Frame.

13. Verfahren nach Anspruch 11 oder 12, wobei das Broadcasten (S12) der Verzögerungsparameterinformationen der Vielzahl von Kommunikationsverbindungen umfasst:
Broadcasten der Verzögerungsparameterinformationen der Vielzahl von Kommunikationsverbindungen in jeder Kommunikationsverbindung, die mit einer Station hergestellt wird,
oder, als Reaktion auf das Herstellen mindestens einer Kommunikationsverbindung mit einer Station, Broadcasten der Verzögerungsparameterinformationen der Vielzahl von Kommunikationsverbindungen in einer Kommunikationsverbindung, die mit einer Station hergestellt wird.

14. Vorrichtung zum Übertragen/Empfangen von Daten, die aufweist:
einen Prozessor; und
einen Speicher zum Speichern von durch den Prozessor ausführbaren Anweisungen;
wobei der Prozessor dazu ausgebildet ist, die Anweisungen auszuführen, um das Verfahren zum Übertragen von Daten nach einem der Ansprüche 1 bis 10 oder das Verfahren zum Empfangen von Daten nach einem der Ansprüche 11 bis 13 durchzuführen.

15. Computerspeichermedium, auf dem Anweisungen gespeichert sind, die bei Ausführung durch einen Prozessor bewirken, dass der Prozessor das Verfahren zum Übertragen von Daten nach einem der Ansprüche 1 bis 10 oder das Verfahren zum Empfangen von Daten nach einem der Ansprüche 11 bis 13 durchführt.

## Revendications

1. Procédé de transmission de données, mis en œuvre par une station, comprenant l'étape consistant à :
recevoir (S22) des informations de paramètre de retard d'une pluralité de liaisons de communication, dans lequel les informations de paramètre de retard indiquent des informations de retard d'accès de catégorie d'accès, dite AC, d'un type de données de réseau sensible au temps, dit TSN, sous chaque liaison de communication ;
**caractérisé par** les étapes consistant à :
sélectionner une première liaison de communication qui satisfait une exigence de retard de transmission/réception de données de TSN parmi les liaisons de la pluralité de liaisons de communication conformément aux informations de retard d'accès d'AC ; et
transmettre (S24), sur la base des informations de paramètre de retard, des données de TSN à transmettre sur la première liaison de communication.

2. Procédé selon la revendication 1, dans lequel l'étape de sélection de la première liaison de communication consiste à :
sélectionner une liaison de communication ayant une valeur de retard d'accès d'AC la plus petite du type de données de TSN parmi les liaisons de la pluralité de liaisons de communication en tant que la première liaison de communication.

3. Procédé selon la revendication 1, dans lequel les informations de paramètre de retard comprennent en outre des informations de chargement d'ensemble de services, dit BSS, et l'étape de sélection de la première liaison de communication consiste à :
sélectionner une liaison de communication ayant une valeur de retard d'accès d'AC du type de données de TSN inférieure à un seuil de retard prédéfini et une valeur de chargement de BSS inférieure à un seuil de chargement prédéfini parmi les liaisons de la pluralité de liaisons de communication en tant que la première liaison de communication.

4. Procédé selon la revendication 3, dans lequel l'étape de sélection de la liaison de communication ayant la valeur de retard d'accès d'AC du type de données de TSN inférieure au seuil de retard prédéfini et la valeur de chargement de BSS inférieure au seuil de chargement prédéfini parmi les liaisons de la pluralité de liaisons de communication en tant que la première liaison de communication consiste à :
en réponse au fait que la valeur de chargement de BSS de chacune d'au moins deux liaisons de communication est inférieure au seuil de chargement prédéfini et que la valeur de retard d'accès d'AC du type de données de TSN de chacune des au moins deux liaisons de communication est inférieure au seuil de retard prédéfini, sélectionner une liaison de communication ayant une valeur de retard d'accès d'AC la plus petite du type de données de TSN entre les au moins deux liaisons de communication en tant que la première liaison de communication.

5. Procédé selon la revendication 3, dans lequel l'étape de sélection de la liaison de communication ayant la valeur de retard d'accès d'AC du type de données de TSN inférieure au seuil de retard prédéfini et la valeur de chargement de BSS inférieure au seuil de chargement prédéfini parmi les liaisons de la pluralité de liaisons de communication en tant que la première liaison de communication consiste à :
en réponse au fait que la valeur de chargement de BSS de chacune d'au moins deux liaisons de communication est inférieure au seuil de chargement prédéfini et que la valeur de retard d'accès d'AC du type de données de TSN de chacune des au moins deux liaisons de communication est inférieure au seuil de retard prédéfini, sélectionner une liaison de communication ayant une valeur de chargement de BSS la plus petite entre les au moins deux liaisons de communication en tant que la première liaison de communication.

6. Procédé selon la revendication 1, dans lequel l'étape de réception (S22) des informations de paramètre de retard de la pluralité de liaisons de communication consiste à :
recevoir des informations de paramètre de retard de la pluralité de liaisons de communication diffusées par l'intermédiaire d'une trame de balise ;
dans lequel la trame de balise comprend une pluralité de champs d'identification de liaison, et des champs d'identification de liaison différents sont configurés pour indiquer des liaisons de communication différentes parmi les liaisons de la pluralité de liaisons de communication.

7. Procédé selon la revendication 6, dans lequel les champs d'identification de liaison différents sont en outre configurés pour indiquer des bandes de fréquences de communication auxquelles appartiennent les différentes liaisons de communication.

8. Procédé selon la revendication 7, dans lequel le champ d'identification de liaison comprend :
un premier champ configuré pour indiquer un identifiant de liaison de communication ; et
un deuxième champ configuré pour indiquer un identifiant de bande de fréquences de communication de l'identifiant de liaison de communication.

9. Procédé selon la revendication 6, dans lequel la trame de balise comprend un champ de retard d'accès d'AC, et le champ de retard d'accès d'AC comprend :
un troisième champ configuré pour indiquer un retard d'accès d'AC du type de données de TSN.

10. Procédé selon la revendication 2 ou la revendication 3, dans lequel les informations de paramètre de retard comprennent en outre :
des informations de retard d'accès de BSS configurées pour indiquer qu'il convient de surveiller une trame de balise suivante qui arrive, de sorte que la station appréhende un temps pour surveiller la trame de balise arrivante suivante après un apprentissage des informations de retard d'accès de BSS.

11. Procédé de réception de données, mis en œuvre par un point d'accès, comprenant les étapes consistant à :
diffuser (S12) des informations de paramètre de retard d'une pluralité de liaisons de communication, dans lequel les informations de paramètre de retard indiquent des informations de retard d'accès de catégorie d'accès, dite AC, d'un type de données de réseau sensible au temps, dit TSN, sous chaque liaison de la pluralité de liaisons de communication, et **caractérisé en ce que** les informations de retard d'accès d'AC permettent à une station de sélectionner une première liaison de communication qui satisfait une exigence de retard de transmission/réception de données de TSN parmi les liaisons de la pluralité de liaisons de communication ; et
recevoir (S14), sur la première liaison de communication, des données de TSN qui sont transmises sur la base des informations de paramètre de retard.

12. Procédé selon la revendication 11, dans lequel l'étape de diffusion (S12) des informations de paramètre de retard de la pluralité de liaisons de communication consiste à :
diffuser les informations de paramètre de retard de la pluralité de liaisons de communication par l'intermédiaire d'une trame de balise.

13. Procédé selon la revendication 11 ou la revendication 12, dans lequel l'étape de diffusion (S12) des informations de paramètre de retard de la pluralité de liaisons de communication consiste à :
diffuser les informations de paramètre de retard de la pluralité de liaisons de communication dans chaque liaison de communication qui a été établie avec une station,
ou, en réponse à l'établissement d'au moins une liaison de communication avec une station, diffuser les informations de paramètre de retard de la pluralité de liaisons de communication dans une liaison de communication qui a été établie avec la station.

14. Dispositif de transmission/réception de données, comprenant :
un processeur ; et
une mémoire destinée à maintenir des instructions exécutables par le processeur ;
dans lequel le processeur est configuré pour exécuter les instructions pour mettre en œuvre le procédé de transmission de données selon l'une quelconque des revendications 1 à 10 ou le procédés de réception de données selon l'une quelconque des revendications 11 à 13.

15. Support d'informations d'ordinateur comportant, maintenues en son sein, des instructions qui, lorsqu'elles sont exécutées par un processeur, amènent le processeur à mettre en œuvre le procédé de transmission de données selon l'une quelconque des revendications 1 à 10 ou le procédé de réception de données selon l'une quelconque des revendications 11 à 13.
